# EUROPEAN PATENT APPLICATION

(11) **EP 1 892 819 A2**
(43) Date of publication of application: **27.02.2008**
(21) Application number: 07011401.2
(22) Date of filing: 11.06.2007
(51) Int. Cl.: H02K 41/03, H02K 16/00, B21D 28/00, H02K 3/46

(54) **Multiple linear motor and machine tool having the same mounted thereon**

(30) Priority: 21.08.2006 JP 2006223785; 21.08.2006 JP 2006223789
(71) Applicant: MURATA KIKAI KABUSHIKI KAISHA, Minami-ku Kyoto-shi Kyoto 601 (JP)
(72) Inventor: Okada, Takuya, Kyoto-shi Kyoto (JP)
(74) Representative: Liedl, Christine

(57) **Abstract**

The present invention provides a linear motor that uses a plurality of cylindrical linear motors to increase power and to enable a compact configuration. A linear motor 1 includes a plurality of cylindrical linear motors 2 each having a shaft member 3 made of a permanent magnet and a coil unit 4 through which the shaft member 3 is movable relative to the coil unit 4. The plurality of cylindrical linear motors 2 are arranged in parallel adjacent to one another. An arrangement pitch between the adjacent cylindrical linear motors 2 is substantially equal to the diameter dimension D of the cylindrical linear motor 2.

## Description

### Field of the Invention

The present invention relates to a linear motor and a machine tool such as a press machine in which the linear motor is mounted.

### Background of the Invention

Proposals have been made of a linear motor comprising a shaft member made of a permanent magnet having alternately arranged N and S poles, and a coil unit having a plurality of coils arranged in an axial direction so as to surround the shaft member (see, for example, the Unexamined Japanese Patent Application Publication (Tokkai-Hei) No. 10-313566).

The linear motor disclosed in the Unexamined Japanese Patent Application Publication (Tokkai-Hei) No. 10-313566 is used in 0A equipment or the like, for example, in place of a combination of a rotary motor and a ball screw. Also for machine tools such as press machines which make direct-acting motion, the use of the linear motor simplifies the configuration and enhances controllability. However, where the linear motor is used for the press machine or the like, a high thrust needs to be obtained. The linear motor generally uses a permanent magnet with a strong magnetic force. However, it is difficult to manufacture linear motors each generating a high thrust, because of manufacturing limits on the size of the magnet and restrictions on a supplied voltage and the like. A linear motor having a plurality of juxtaposed cylindrical linear motors has been proposed, but it is disadvantageously difficult to make this linear motor compact. Further, outputs from the cylindrical linear motors may act nonuniformly.

### Summary of the Invention

It is an object of the present invention to provide a linear motor that uses a plurality of cylindrical linear motors to increase power and to enable a compact configuration.

It is another object of the present invention to provide a linear motor that provides well-balanced rectilinear outputs.

It is another object of the present invention to avoid the possible impact of a wire connection portion through which a coil unit is supplied with electricity, on the intervals at which the cylindrical linear motors are juxtaposed, enabling a more compact configuration.

It is yet another object of the present invention to provide a linear motor mounted machine tool which requires a reduced number of parts, enabling the structure to be simplified.

A linear motor in accordance with a first invention is characterized by comprising a plurality of cylindrical linear motors each having a shaft member comprising a permanent magnet and a coil unit through which the shaft member is movable relative to the coil unit, the plurality of cylindrical linear motors being arranged in parallel adjacent to one another. In this configuration, the plurality of cylindrical linear motors are arranged in parallel, allowing outputs from the individual cylindrical linear motors to be collectively utilized to obtain high power. Further, the individual linear motors, the cylindrical linear motors each having a cylindrical external shape, are arranged in parallel and adjacent to one another, enabling a compact configuration. The term "adjacent" as used herein means that the cylindrical linear motors are arranged close and adjacent to one another.

An arrangement pitch between the adjacent cylindrical linear motors may be substantially equal to the diameter dimension of the cylindrical linear motor. In this case, the adjacent cylindrical linear motors may be arranged in contact with each other or as close to each other as possible to the extent that they are not in contact with other. Where the adjacent cylindrical linear motors are not in contact with each other, they are arranged as close to each other as possible to the extent that they do not come into contact with each other even with possible thermal expansion or vibration.

According to the present invention, the linear motor may further comprise a wire connection portion located in a gap portion formed between a virtual line joining central portions of the adjacent cylindrical linear motors together and a tangent to outer peripheral surfaces of the adjacent cylindrical linear motors, the coil units of the cylindrical linear motors being supplied with electricity through the wire connection portion. When the cylindrical linear motors are arranged adjacent to one another, the wire connection portion through which the coil units of the cylindrical linear motors are supplied with electricity may project and obstruct the arrangement of the cylindrical linear motors. Where located in the gap portion formed between the virtual line joining the central portions of the adjacent cylindrical linear motors together and the tangent to the outer peripheral surfaces of the adjacent cylindrical linear motors as described above, the wire connection portion can be placed by efficiently using the gap portion between the adjacent cylindrical linear motors. This provides a more compact linear motor.

According to the present invention, the linear motor may further comprise one common coil case shared by the plurality of cylindrical linear motors and having a plurality of coil unit accommodating spaces which are formed in respective areas of the coil case and in which the coil units of the respective cylindrical linear motors are accommodated. This arrangement allows the coil case to be shared by the individual cylindrical linear motors, enabling a more compact configuration.

A linear motor in accordance with a second invention comprises a plurality of cylindrical linear motors arranged in parallel and each having a shaft member comprising a permanent magnet and a coil unit through which the shaft member is movable relative to the coil unit, the plurality of cylindrical linear motors having output portions coupled together by a coupling member so as to constitute one output shaft through which power is output. The linear motor is characterized in that the plurality of cylindrical linear motors are arranged so that each of the cylindrical linear motor is in a point-symmetric relationship with another appropriate one with respect to a center of the output shaft which serves as a symmetry center. In this configuration, the plurality of cylindrical linear motors are arranged in parallel, allowing outputs from the individual cylindrical linear motors to be collectively utilized to obtain high power. Further, the cylindrical linear motors are arranged so that each of the cylindrical linear motors is in a point-symmetric relationship with another appropriate one with respect to the center of the output shaft serving as a symmetry center.
Consequently, rectilinear outputs from the pair of point-symmetric cylindrical linear motors act on the center of the output shaft serving as a symmetry center. Thus, in spite of the plurality of cylindrical linear motors installed, well-balanced rectilinear outputs can be obtained.

A linear motor in accordance with a third invention comprises a plurality of cylindrical linear motors arranged in parallel and each having a shaft member comprising a permanent magnet and a coil unit through which the shaft member is movable relative to the coil unit, the plurality of cylindrical linear motors having output portions coupled together by a coupling member so as to constitute one output shaft through which power is output. The linear motor is characterized in that a center of the output shaft is located at a centroid of arrangement of the plurality of cylindrical linear motors. Also in this configuration, since the plurality of cylindrical linear motors are arranged in parallel, the linear motor can provide high power in spite of the low power of each cylindrical linear motor. Further, the center of the output shaft is located at the centroid of the arrangement of the plurality of cylindrical linear motors. Thus, in spite of the plurality of cylindrical linear motors installed, well-balanced rectilinear outputs can be obtained.

The present invention may comprise a linear motor having any of the first to third above-described configurations and a movable portion moved forward and backward by the linear motor to move a tool or a workpiece.

The term "machine tool" as used herein refers to "machine tools" in a broad sense which include not only machines such as lathes which perform cutting operations but also machines in general which machine materials. The machine tool includes punch presses and other press machines. In this configuration, the movable portion that moves forward and backward is driven by the linear motor. Unlike machine tools using a rotary motor, this configuration eliminates the need for a mechanism that converts rotation into rectilinear motion. This reduces the number of parts required, simplifying the structure of the machine tool. Further, the linear motor, serving as a driving source, comprises cylindrical linear motors arranged in parallel and adjacent to one another. This results in high power and uniform rectilinear outputs.

The linear motor mounted machine tool in accordance with the present invention may be a press machine that uses the linear motor as a driving source that drives a press tool. Since the press machine requires high power for pressing, the present invention effectively provides the advantage of allowing the linear motor to provide high power.

When the machine tool is a press machine that uses the linear motor as a driving source that drives a press tool, the linear motor may be installed in a press frame so that the output shaft aligns with a press elevating and lowering axis along which the press tool elevates and lowers. When the output shaft of the linear motor aligns with the press elevating and lowering axis along which the press tool elevates and lowers, accurate pressing can be achieved by the simple configuration.

The linear motor in accordance with a first invention comprises the plurality of cylindrical linear motors each having the shaft member comprising the permanent magnet and the coil unit through which the shaft member is movable relative to the coil unit, the plurality of cylindrical linear motors being arranged in parallel adjacent to one another. The plurality of cylindrical linear motors can thus be used to increase power and to provide a compact configuration. Where the arrangement pitch between the adjacent cylindrical linear motors is substantially equal to the diameter dimension of the cylindrical linear motor, a more compact configuration can be provided. Where the linear motor comprises the wire connection portion located in the gap portion formed between the virtual line joining the central portions of the adjacent cylindrical linear motors together and the tangent to the outer peripheral surfaces of the adjacent cylindrical linear motors, the coil units of the cylindrical linear motors being supplied with electricity through the wire connection portion, the wire connection portion through which the coil unit is supplied with electricity can be prevented from affecting the intervals at which the cylindrical linear motors are juxtaposed. This makes it possible to provide a more compact configuration. Where the linear motor comprises one common coil case shared by the plurality of cylindrical linear motors and having the plurality of coil unit accommodating spaces which are formed in respective areas of the coil case and in which the coil units of the respective cylindrical linear motors are accommodated, a more compact configuration can be provided.

The linear motor mounted machine tool in accordance with the present invention comprises the linear motor in accordance with the present invention and the movable portion moved forward and backward by the linear motor to move a tool or a workpiece. This makes it possible to provide a simple structure with a reduced number of parts.

The linear motor in accordance with the second invention comprises the plurality of cylindrical linear motors arranged in parallel and each having the shaft member comprising the permanent magnet and the coil unit through which the shaft member is movable relative to the coil unit, the plurality of cylindrical linear motors having output portions coupled together by the coupling member so as to constitute one output shaft through which power is output. The plurality of cylindrical linear motors are arranged so that each of the cylindrical linear motors is in a point-symmetric relationship with another appropriate one with respect to the center of the output shaft which serves as a symmetry center. The plurality of cylindrical linear motors can thus be used to increase power. Further, the individual cylindrical linear motors can provide uniform, well-balanced rectilinear outputs.

The linear motor in accordance with the third invention comprises the plurality of cylindrical linear motors arranged in parallel and each having the shaft member comprising the permanent magnet and the coil unit through which the shaft member is movable relative to the coil unit, the plurality of cylindrical linear motors having output portions coupled together by the coupling member so as to constitute one output shaft through which power is output. The center of the output shaft is located at the centroid of the arrangement of the plurality of cylindrical linear motors. The plurality of cylindrical linear motors can thus be used to increase power. Further, the individual cylindrical linear motors can provide uniform, well-balanced rectilinear outputs.

The linear motor mounted machine tool in accordance with the present invention comprises the linear motor in accordance with the present invention and the movable portion moved forward and backward by the linear motor to move a tool or a workpiece. This makes it possible to provide a simple structure with a reduced number of parts. Where the linear motor mounted machine tool in accordance with the present invention is a press machine that uses the linear motor as a driving source that drives a press tool, the present invention effectively provides the advantage of allowing the linear motor to provide high power and well-balanced rectilinear outputs. Further, when the linear motor is installed in the press frame so that the output shaft aligns with the press elevating and lowering axis along which the press tool elevates and lowers, accurate pressing can be achieved by the simple configuration.

Other features, elements, processes, steps, characteristics and advantages of the present invention will become more apparent from the following detailed description of preferred embodiments of the present invention with reference to the attached drawings.

### Brief Description of the Drawings

Figure 1A is a vertical sectional view of a linear motor in accordance with an embodiment of the present invention, and Figure 1B is a horizontal sectional view of the linear motor.
Figure 2 is a sectional view showing the operating state of the linear motor.
Figure 3 is a diagram illustrating the positional relationship among cylindrical linear motors in a linear motor in accordance with another embodiment of the present invention.
Figure 4 is a diagram illustrating the positional relationship among cylindrical linear motors in a linear motor in accordance with yet another embodiment of the present invention.
Figure 5 is a diagram illustrating the positional relationship among cylindrical linear motors in a linear motor in accordance with still another embodiment of the present invention.
Figure 6 is a diagram illustrating the positional relationship among cylindrical linear motors in a linear motor in accordance with further another embodiment of the present invention.
Figure 7 is a diagram illustrating the positional relationship among cylindrical linear motors in a linear motor in accordance with further another embodiment of the present invention.
Figure 8 is a diagram illustrating the positional relationship among cylindrical linear motors in a linear motor in accordance with further another embodiment of the present invention.
Figure 9 is a diagram illustrating the positional relationship among cylindrical linear motors in a linear motor in accordance with further another embodiment of the present invention.
Figure 10 is a side view of a press machine that is a machine tool using a linear motor in accordance with an embodiment of the present invention.

### Detailed Description of the Preferred Embodiments

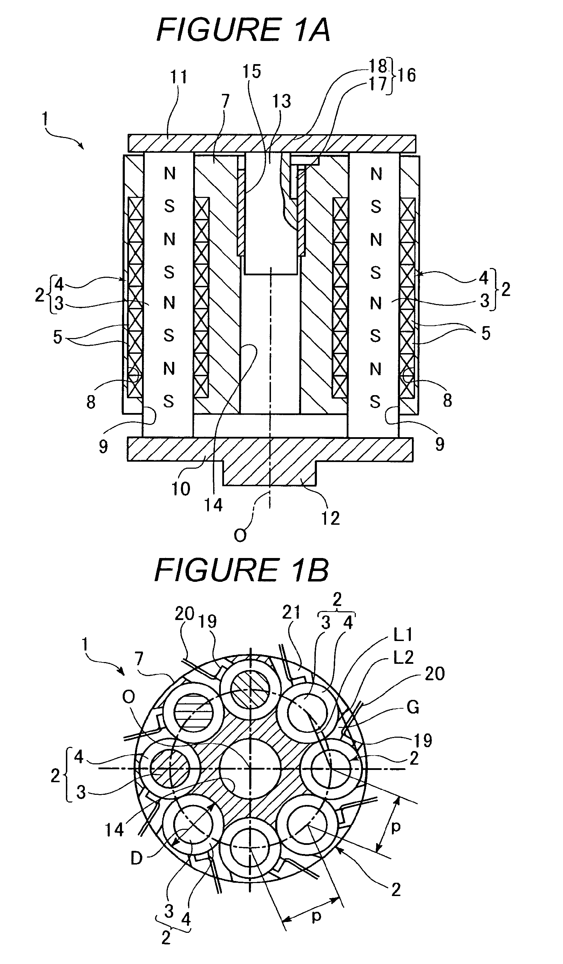

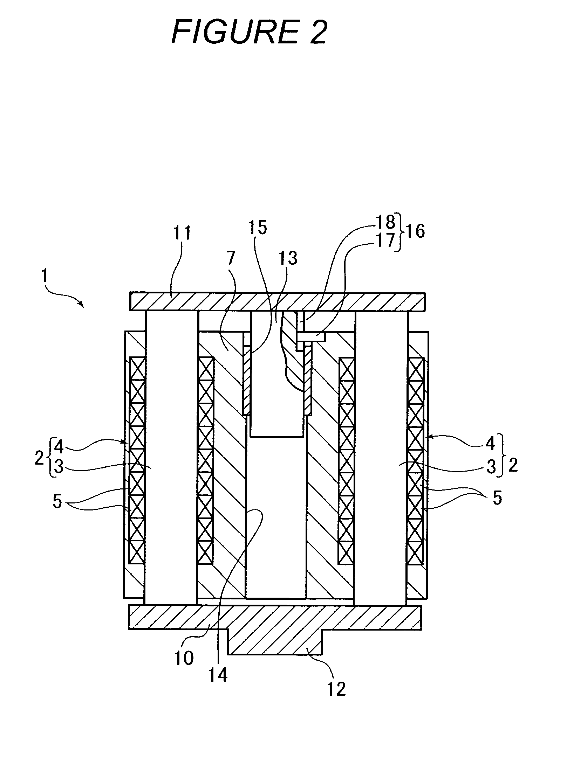

Embodiments of a first invention and a second invention will be described with reference to Figure 1 and Figure 2.

According to the first invention, a linear motor 1 has a plurality of cylindrical linear motors 2 arranged in parallel and adjacent to one another.

According to the second invention, the plurality of cylindrical linear motors 2 are arranged so that each of the cylindrical linear motors 2 is in a point-symmetric relationship with another appropriate one with respect to the center 0 of an output shaft which serves as a symmetry center. That is, any cylindrical linear motor 2 is located at a position to which another appropriate cylindrical linear motor 2 will be located where it is rotated through 180 degrees around the output shaft center 0. In the point-symmetric arrangement form in this example, a plurality of the cylindrical linear motors 2 constructed in accordance with the same specifications are arranged on a virtual circle around the output shaft center 0 in its circumferential direction.

Each of the cylindrical linear motors 2 is composed of a shaft member 3 made of a permanent magnet having alternately arranged N and S poles and a coil unit 4 which is made of a plurality of coils 5 arranged in an axial direction so as to surround the periphery of the shaft member 3 and through which the shaft member 3 is movable in the axial direction relative to the coil unit 4. The coil unit 4 serves as a stator and the shaft member 3 serves as a moving member. Alternatively, the shaft member 3 may be a stator. The shaft member 3 is made of one round-bar-like member but may be a plurality of permanent magnets arranged in the axial direction.

One common coil case 7 is provided for the plurality of cylindrical linear motors 2 and has coil unit accommodating spaces 8 which are formed in the respective areas of the coil case 7 and in each of which the coil unit 4 of the corresponding linear motor 2 is accommodated. Each of the coil unit accommodating spaces 8 is formed as an annular recess around a shaft member through-hole 9 extending from one end to the other end of the coil case 7.

The shaft member 3 of each cylindrical linear motor 2 penetrates the corresponding shaft member through-hole 9 in the coil case 7. One ends of the shaft members 3 are coupled together by a coupling member 10, and other ends of the shaft members 3 are coupled together by a coupling member 11. The coupling member 11 has an output shaft 12 formed in the center 0 of the arrangement of the cylindrical linear motors 2. The other coupling member 11 has a guide shaft 13 provided in its central portion and slidably fitted, via a bush 15 serving as a sliding bearing, in a guide hole 14 formed in the coil case 7. A key groove 17 is formed between the guide shaft 13 and the coil case 7 around the outer periphery of the guide shaft 13 as locking means 16. A key 18 engaging slidably with the key groove 17 is fixed to the coil case 7.

In the present embodiment, the plurality of cylindrical linear motors 2 are accommodated in the common coil case 7. However, different coil cases (not shown in the drawings) may be provided for the respective cylindrical linear motors 2 so that the respective coil units 4 can be accommodated in the corresponding coil cases, which may further be combined together using a combining member such as a frame.

The arrangement pitch p between the adjacent cylindrical linear motors 2 is substantially equal to the diameter dimension D of the cylindrical linear motor 2. The diameter dimension D of the cylindrical linear motor 2 is the same as the diameter of the coil unit 4. Where the coil unit 4 of each cylindrical linear motor 2 is accommodated in the common coil case 7 as in the case of the present embodiment, the diameter dimension D is the same as the diameter dimension of the coil 5. Where the coil units 4 of the respective cylindrical linear motors 2 are accommodated in the different coil cases 7, the diameter dimension D of each of the coil cases 7 is the same as the diameter dimension D of the cylindrical linear motor 2.

The coil unit 4 of each cylindrical linear motor 2 has a wire connection portion 19 from which a feeding wire 20 is led out. Further, the wire connection portion 19 has a wire (not shown in the drawings) that connects the coils 5 of the coil unit 4 together. The wire connection portion 19 of each cylindrical linear motor 2 is located in a gap portion G formed between a virtual line L1 joining central portions of the adjacent cylindrical linear motors 2 together and a tangent L2 to the outer peripheral surfaces of the adjacent cylindrical linear motors 2. The coil case 7 has openings 21 in each of which the corresponding wire connection portion 19 and the feeding wire 20 are accommodated. The coil case 7 may have cooling means.

In the linear motor 1 configured as described above, an excitation current is synchronously applied to the coil units 4 of the cylindrical linear motors 2, and the direction of the current is switched between a positive side and a negative side to move the shaft members 3 of the cylindrical linear motors 2 forward and backward together with the coupling member 10. The forward or backward movement of the coupling member 10 is extracted as a forward or backward output of the output shaft 12. Figure 1A shows that the output shaft 12 has lowered to a lowering end. Figure 2 shows that the output shaft 12 has elevated to an elevating end.

Since the linear motor 1 has the plurality of cylindrical linear motors 2 arranged in parallel, it can provide high power in spite of the low power of each cylindrical linear motor 2.

The cylindrical linear motors 2 are arranged so that each of the cylindrical linear motors 2 is in a point-symmetric relationship with another appropriate cylindrical linear motor 2 with respect to the center 0 of the output shaft 12, serving as a symmetry center. Consequently, the pair of point-symmetric cylindrical linear motors 2, 2 act on the center 0 of the output shaft 12, serving as a symmetry center. Thus, in spite of the plurality of cylindrical linear motors 2 installed, well-balanced rectilinear outputs can be obtained.

Further, the individual linear motors 2 are cylindrical linear motors that outside diameters are cylindrical shapes, and arranged in parallel and adjacent to one another. This makes it possible to provide a compact configuration.

In this case, the arrangement pitch p between the adjacent linear motors 2 is substantially equal to the diameter dimension D of the cylindrical linear motor 2. This makes it possible to provide a more compact configuration.

The adjacent cylindrical linear motors 2 may be arranged in contact with each other or as close to each other as possible to the extent that they are not in contact with each other. Where the adjacent cylindrical linear motors 2 are not in contact with each other, they are arranged as close to each other as possible to the extent that they do not come into contact with each other even with thermal expansion, vibration, or the like.

In the present embodiment, the plurality of cylindrical linear motors 2 are accommodated in the coil unit accommodating spaces 8, formed in the one common coil case 7. The coil case 7 is thus shared by the individual cylindrical linear motors 2, making it possible to provide a further compact configuration. Furthermore, in the present embodiment, the feeding wire connection portion 19, through which the coil unit 4 is supplied electricity, is located in the gap portion G formed between the virtual line L1 joining the central portions of the adjacent cylindrical linear motors 2 together and the tangent L2 to the outer peripheral surfaces of the adjacent cylindrical linear motors 2. This enables the wire connection portion 19 to be located by efficiently using the gap portion G between the adjacent cylindrical linear motors 2. This makes it possible to provide a more compact linear motor.

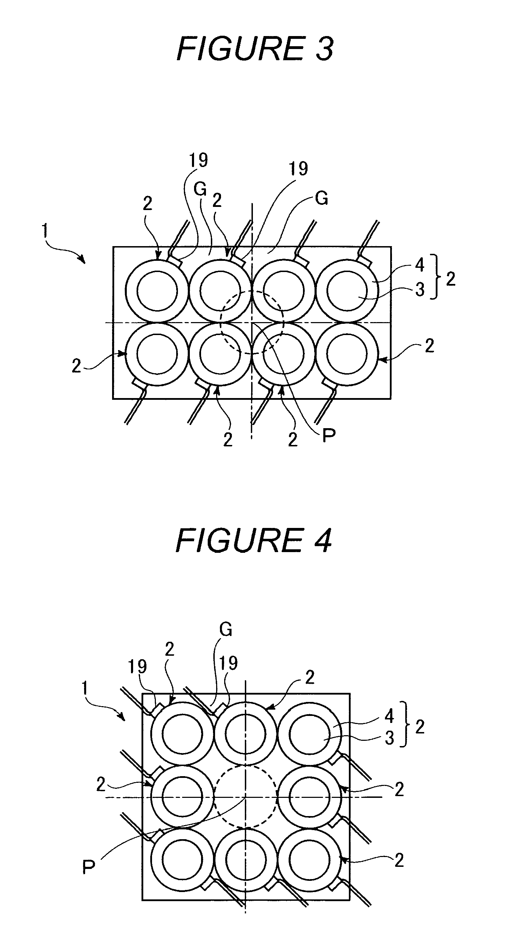

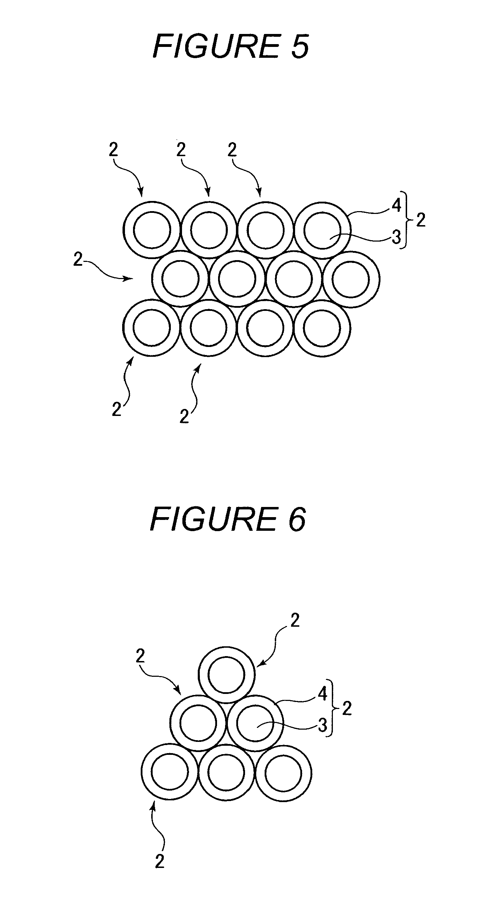

Various other forms may be adopted to arrange the cylindrical linear motors 2 adjacent to one another. For example, the cylindrical linear motors 2 may be arranged in a plurality of lines as shown in Figure 3 or on each side of a square as shown in Figure 4. Alternatively, the cylindrical linear motors 2 may be arranged in staggered lines as shown in Figure 5 or like stacked straw bags as shown in Figure 6.

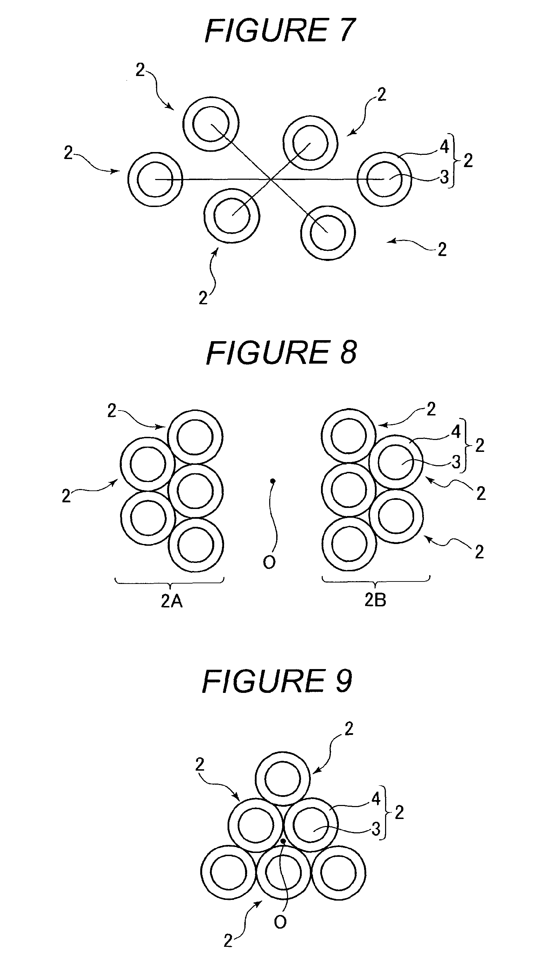

Further, various other forms may be adopted to arrange the cylindrical linear motors 2 point-symmetrically with respect to the center of the output shaft 12, serving as a symmetry center. For example, the cylindrical linear motors 2 may be arranged in two lines as shown in Figure 3 or on each side of a square as shown in Figure 4. Alternatively, as shown in Figure 7, it is possible that the paired point-symmetric cylindrical linear motors 2, 2 are located at an equal distance from the output shaft center 0, whereas the different pairs of cylindrical linear motors 2, 2 are located at the respective distances from the output shaft center 0. Alternatively, as shown in Figure 8, two sets of cylindrical linear motors 2 each of which includes the cylindrical linear motors 2 located in proximity to one another are provided so that the cylindrical linear motor sets 2A, 2B are point-symmetric with respect to the output shaft center 0.

Figure 9 shows an embodiment corresponding to a third invention. In the present embodiment, the plurality of cylindrical linear motors 2 are arranged like stacked straw bags so that the centroid of the arrangement of the cylindrical linear motors 2 aligns with the output shaft center 0. As is the case with the above embodiment, the plurality of cylindrical linear motors 2 can be used to increase power and to provide well-balanced rectilinear outputs.

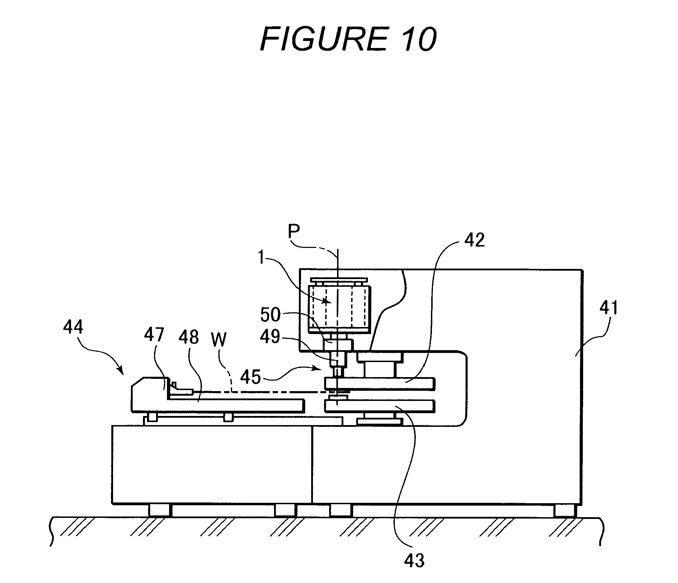

Figure 10 shows a press machine as an example of a machine tool using a linear motor as a driving source. The press machine has a frame 41, and tool supports 42, 43 and a workpiece feeding mechanism 44 installed in the lower part of the frame, and a press mechanism 45 installed in the upper part of the frame and using the linear motor 1 to serve as a press driving source.

The tool supports 42, 43 are composed of an upper turret and a lower turret which are concentrically arranged. Punch tools are mounted on the upper tool support 42 and die tools are mounted on the lower tool support 43, respectively, at a plurality of positions in the circumferential direction thereof. Each of the punch and die tools is indexed to a predetermined punch position P by rotating the tool supports 42, 43. The workpiece feeding mechanism 44 uses a work holder 47 to grip the edge of a workpiece W that is a plate material. The workpiece feeding mechanism 44 then moves the workpiece W forward, backward, rightward, or leftward on a table 48.

The press mechanism 45 supports a ram 49 that elevates and lowers the punch tool indexed to the punch position P on the tool support 42, so that the ram 49 can be elevated and lowered via a ram guide 50. The ram 49 is drivingly elevated and lowered by the linear motor 1.

The linear motor 1 may be as described above with reference to Figure 1 and Figure 2 or Figure 3 to Figure 9. The linear motor 1 has the coil unit 4 (Figure 1) fixed to the frame 41 and the shaft member 3 combined to the ram 49, which serves as a movable portion. In the embodiment in Figure 1, the coil case 7 is fixed to the frame 41, and the output shaft 12 is combined to the ram 49.

The press machine configured as described above uses the linear motor 1 as a press driving source. Thus, compared to press machines using a rotary motor, the present embodiment eliminates the need for a mechanism that converts rotation into the rectilinear motion of the ram 49. This reduces the number of parts required for the press mechanism 45, simplifying the configuration. Further, compared to press machines using a hydraulic cylinder as a press driving source, the present embodiment eliminates the need for a hydraulic unit, simplifying the configuration. Moreover, the linear motor 1 offers high positional accuracy, enabling high-quality, accurate machining.

The linear motor in accordance with the present invention can be used not only in press machines but also in machine tools in general comprising a movable portion moving a tool or workpiece, to drive the movable portion. The linear motor in accordance with the present invention can further be used as a driving source for various types of equipment.

While the present invention has been described with respect to preferred embodiments thereof, it will be apparent to those skilled in the art that the disclosed invention may be modified in numerous ways and may assume many embodiments other than those specifically set out and described above. Accordingly, it is intented by the appended claims to cover all modifications of the present invention that fall within the true spirit and scope of the invention.

## Claims

1. A linear motor **characterized by** comprising a plurality of cylindrical linear motors each having a shaft member comprising a permanent magnet and a coil unit through which the shaft member is movable relative to the coil unit, the plurality of cylindrical linear motors being arranged in parallel adjacent to one another.

2. A linear motor according to the Claim 1, **characterized in that** an arrangement pitch between the adjacent cylindrical linear motors is substantially equal to the diameter dimension of the cylindrical linear motor.

3. A linear motor according to the Claim 2, **characterized by** further comprising a wire connection portion located in a gap portion formed between a virtual line joining central portions of the adjacent cylindrical linear motors together and a tangent to outer peripheral surfaces of the adjacent cylindrical linear motors, the coil units of said cylindrical linear motors being supplied with electricity through the wire connection portion.

4. A linear motor according to the Claim 1, **characterized by** further comprising one common coil case shared by said plurality of cylindrical linear motors and having a plurality of coil unit accommodating spaces which are formed in respective areas of the coil case and in which the coil units of the respective cylindrical linear motors are accommodated.

5. A linear motor mounted machine tool **characterized by** comprising a linear motor according to Claim 1 and a movable portion moved forward and backward by the linear motor to move a tool or a workpiece.

6. A linear motor comprising a plurality of cylindrical linear motors arranged in parallel and each having a shaft member comprising a permanent magnet and a coil unit through which the shaft member is movable relative to the coil unit, the plurality of cylindrical linear motors having output portions coupled together by a coupling member so as to constitute one output shaft through which power is output, the linear motor being **characterized in that** said plurality of cylindrical linear motors are arranged so that each of the cylindrical linear motors is in a point-symmetric relationship with another appropriate one with respect to a center of the output shaft which serves as a symmetry center.

7. A linear motor mounted machine tool **characterized by** comprising a linear motor according to Claim 6 and a movable portion moved forward and backward by the linear motor to move a tool or a workpiece.

8. A linear motor mounted machine tool according to Claim 7, **characterized in that** said machine tool is a press machine that uses said linear motor as a driving source that drives a press tool.

9. A linear motor mounted machine tool according to Claim 8, **characterized in that** said linear motor is installed in a press frame so that said output shaft aligns with a press elevating and lowering axis along which the press tool elevates and lowers.

10. A linear motor comprising a plurality of cylindrical linear motors arranged in parallel and each having a shaft member comprising a permanent magnet and a coil unit through wh i ch the shaft member is movable relative to the coil unit, the plurality of cylindrical linear motors having output portions coupled together by a coupling member so as to constitute one output shaft through which power is output, the linear motor being **characterized in that** a center of said output shaft is located at a centroid of arrangement of said plurality of cylindrical linear motors.

11. A linear motor mounted machine tool **characterized by** comprising a linear motor according to Claim 10 and a movable portion moved forward and backward by the linear motor to move a tool or a workpiece.

12. A linear motor mounted machine tool according to Claim 11, **characterized in that** said machine tool is a press machine that uses said linear motor as a driving source that drives a press tool.

13. A linear motor mounted machine tool according to Claim 12, **characterized in that** said linear motor is installed in a press frame so that said output shaft aligns with a press elevating and lowering axis along which the press tool elevates and lowers.
